# EUROPEAN PATENT APPLICATION

(11) **EP 3 343 718 A1**
(43) Date of publication of application: **04.07.2018**
(21) Application number: 17210823.5
(22) Date of filing: 28.12.2017
(51) Int. Cl.: H02J 3/14, H02J 3/38

(54) **SMALL GRID LOAD CONTROL**

(30) Priority: 31.12.2016 US 201662441230 P
(71) Applicant: ABB Schweiz AG, 5400 Baden (CH)
(72) Inventor: CARR, Joseph, Raleigh, NC 27606 (US); BRISSETTE, Alex, Raleigh, NC 27601 (US); CUI, Tao, Princeton, NJ 08540 (US)
(74) Representative: Gregorj S.r.l.

(57) **Abstract**

A microgrid (100) is disclosed which includes a number of electrical loads (112, 114, 116,110) and a number of potential grid forming sources (104, 106, 108, 110). The potential grid forming sources can include an electrical grid (104), PhotoVoltaic (PV) system (106), energy storage system (110), and a generator (108), among potential others. The microgrid (100) can operate in islanded mode. A controller(102) can be used to control the powered state of the electrical loads (112, 114, 116,110) and potential grid forming sources (104, 106, 108, 110) through use of a priority list of actions in which the controller (102) determines whether adding or removing electrical loads (112, 114, 116,110) will alleviate a power imbalance. In some forms the controller 8102) can tally the electrical loads (112, 114, 116,110) by considering a potential power source (such as one of the potential grid forming sources placed in a mode to provide power to the microgrid) as a negative load. A validity check can be provided in the priority list to assist in determining whether an action can be taken.

## Description

### TECHNICAL FIELD

The present invention generally relates to microgrids or nanogrids, and more particularly, but not exclusively, to controlling loads in microgrids.

### BACKGROUND

Providing the ability to manage power in a microgrid or nanogrid remains an area of interest. Some existing systems have various shortcomings relative to certain applications. Accordingly, there remains a need for further contributions in this area of technology.

### SUMMARY

One embodiment of the present invention is a unique microgrid controller. Other embodiments include apparatuses, systems, devices, hardware, methods, and combinations for managing power in a microgrid. Further embodiments, forms, features, aspects, benefits, and advantages of the present application shall become apparent from the description and figures provided herewith.

### BRIEF DESCRIPTION OF THE FIGURES

FIG. 1 depicts an embodiment of a microgrid.
FIG. 2 depicts an embodiment of a time window, power target, and average power use.
FIG. 3 depicts different power modes of an energy storage system (ESS).
FIG. 4 depicts different power modes of a PV system or generator.
FIG. 5 illustrates a possible power accounting by a controller of the microgrid.
FIG. 6 illustrates another possible power accounting by a controller of the microgrid.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

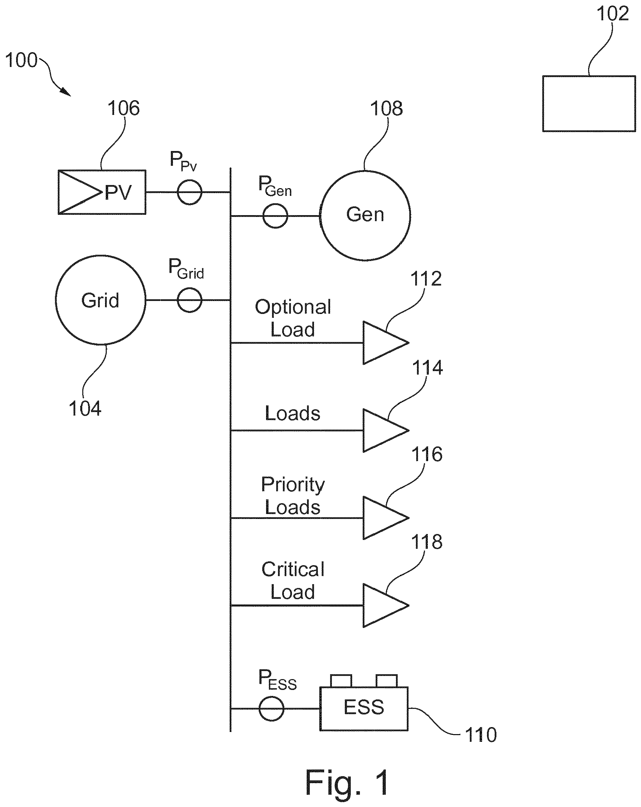

With reference to FIG. 1, one embodiment of a microgrid 100 is shown in which a number of potential grid forming sources are used to provide power to a number of separate loads. In one form a microgrid is a low voltage grid having distributed energy resources and loads that can be operated in a controlled and coordinated way either connected to the main power network or in islanded mode. Grid 100 can alternatively be referred to as a microgrid or a nanogrid which can be used interchangeably, and any reference herein to one is not intended to imply such concepts are not to be applied to the other unless as would be understood to the contrary.

A controller 102 is used with the microgrid 100 to select which of the potential grid forming sources are selected to function as the grid forming source, while the other potential sources are disconnected or re-tasked to operate as a load device (either in a capacity to remove or provide power to the microgrid 100 as will be discussed further below). The controller 102 can be used to manage loads and ensure that power draw does not exceed an amount suitable for whichever grid forming source is used. In one non-limiting example, the controller 102 can be used to selectively de-power loads to avoid surcharges from a utility company during periods of peak charges. The controller 102 is structured to issue commands directly or indirectly (such as through an intermediary component) to the various electrical devices that comprise the potential grid forming sources and/or electrical loads. Such commands include turning the loads on and off (e.g. via a breaker), placing a potential grid forming source in grid forming mode, etc as will be appreciated by the description that follows below.

Shown in the illustrated embodiment are potential grid forming sources in the form of a grid 104, a photovoltaic (PV) system 106, a generator 108, and an electrical storage system (ESS) 110. Although four separate grid forming sources are depicted in FIG. 1, any number of grid forming sources can be used which includes fewer than the depicted sources and/or alternative makeup of other types of sources which are contemplated herein. To set forth just one nonlimiting example, the photovoltaic source can be any renewable resource such as wind, geothermal, micro-hydro, or wave generators. A renewable resource might be considered any generator which does not consume a fuel, but is instead powered by some renewable phenomenon like sunlight, wind, or water motion. In addition to the above, more than one of the same type of potential grid forming sources can also be used in any given embodiment. The microgrid 100 can thus receive power from any suitable grid forming source. In some embodiments the microgrid 100 can be islanded such as when disconnected from a utility grid.

The various grid forming sources of the illustrated embodiment in FIG. 1 can take on any variety of forms. For example, the grid 104 can be in the form of a utility grid, among other potential configurations. The PV system 106 can take on any variety of forms including any number of photovoltaic arrays that are interconnected in any number of manners. No limitation is hereby intended as to the scope and architecture of the PV system 106. The generator 108 can take on the form of any suitable generator such as, but not limited to, a natural gas generator, gas turbine powered generator, etc. The ESS 110 can take on the form of any suitable energy storage system such as a bank of batteries interconnected to provide power to the microgrid 100.

The loads can take on any variety of electrical loads that either take power from the grid 104 or contribute power to it. The loads depicted in FIG. 1 include an optional load 112, load 114, priority load 116, and a critical load 110. Although four types of loads are depicted in FIG. 1, any number of electrical load types can be used which includes fewer than the depicted loads types and/or alternative makeup of other types of electrical loads which are contemplated herein. Any number of electrical loads can be included in each of the separate categories, irrespective of the labelling of the load in singular or plural form. For example, the "Loads" 114 can include one or more loads in any given embodiment.

As mentioned above, the controller 102 can be used to designate which of the grid forming sources will be used to provide power to the microgrid 100. In some embodiments of the instant application, and as will be described further below, the controller 102 is able to re-designate the remaining grid forming sources to be electrical loads. As will be discussed, such loads can be considered a negative load for purposes of determining load capacities of the microgrid 100 in any given configuration of grid forming sources. In one nonlimiting form the controller 102 can be a distributed controller.

For purposes of forming a grid source, the power at the grid forming source is used to assess the capacity of the grid and whether any control actions are needed to reconfigure the grid in case of higher than acceptable load. As illustrated in FIG. 1, when the PV system is placed in a grid forming source mode, the power available to electrical loads connected to the microgrid 100 is assessed as the power available from the PV system 106, denoted as P_{PV}. The other potential grid forming sources have similar notation for power associated with itself. As will be appreciated, a grid-forming source provides a constant voltage reference for the microgrid/nanogrid 100 and is capable of adjusting the power output to follow the changing requirements of the loads. This source may be an electric utilityconnection, a natural gas generator, a PV inverter, or an energy storage inverter, among any potential others as described above. The nanogrid 100 is capable of designating any of these resources to be a grid-forming source.

Each grid-forming source can have a power management target associated with it. For example, the electric utility 104 connection may have a target set in order to avoid peak loading charges, while the target associated with the PV inverter 106 may be set at or just below its maximum power point in order to ensure that the loads don't exceed the available capacity of the PV system 106. Generator 108 and energy storage inverters 110 could similarly have power targets set based on their power capacity. These targets may be fixed to a value set by the user or may vary based on environmental conditions, as in the case of the maximum power point of the PV inverter 106 which depends on available sunlight.

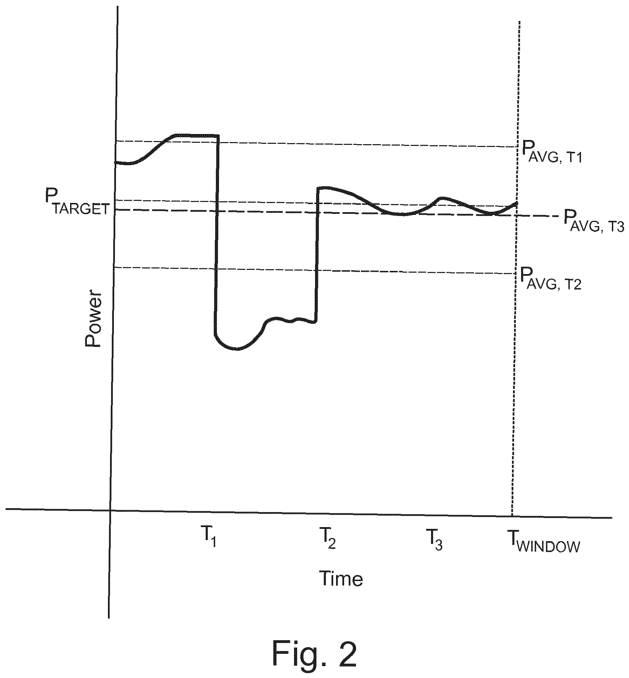

It is contemplated that the average power drawn from any of the current grid-forming sources when in grid-forming source mode is measured over a time window such as that illustrated shown in FIG. 2. In one embodiment the time window can be user-defined. The average power can be calculated based on a measured power from the beginning of a current time window as well as the projected power for the remainder of the window assuming that power consumption remains at its current value for the remainder of the window. Such an average power can thus be continually calculated throughout the duration of the window. If the projected power limit is higher than the power target, as at time T₁, then the system scans a priority list of available actions to find an action that will reduce the power consumption (described more fully below). If the power limit is lower than the power target, as at time T₂, then the system scans the priority list to find an action that will increase the power consumption (also described more fully below).

A deadband can be implemented around the target power, such as ±5% of the target, to prevent excessive switching when the deviation from the target power is less than the smallest step that can be taken to correct the deviation. The deadband can thus be calculated based upon a configuration of the microgrid 100, and alternatively can be set in advance by a user. An example of a deadband can be seen at time T₃ in FIG. 2 when the projected average is slightly above the target power, but not enough above target power that taking any action will result in an average that is closer to the target.

When an action is called for, the system as described herein (e.g. the controller 102) examines a priority list such as the one shown below in Table 1, starting at the lowest priority action if power needs to be decreased and at the highest priority action if power needs to be increased. When the controller 102 interrogates each of the priority level, the system checks to see if the action is valid. Such a validity check can occur first in some embodiments, but any particular order is not needed unless explicitly required to the contrary.

**Table 1: Example of an Action Priority List**

| Priority | Action | Valid? | Taken? | Effect |
|---|---|---|---|---|
| 1 | Shed Priority Load | Y | N | Decrease Power |
| 2 | Turn on Generator in Grid-Forming Mode | Y | N | Decrease Power |
| 3 | Shed Loads | Y | N | Decrease Power |
| 4 | Discharge ESS | Y | N | Decrease Power |
| 5 | Curtail PV | N | N | Increase Power |
| 6 | Charge ESS | Y | N | Increase Power |
| 7 | Shed Optional Load | Y | Y | Decrease Power |

In the example shown Table 1, the PV inverter is currently in grid-forming mode. It is therefore not valid to curtail the output of the PV inverter, as that is only possible if the inverter is in a constant power control mode. If the action is not valid then the system skips the action and checks the next one in the hierarchy of the priority list.

When the controller 100 scans the priority list, if a potential action to increase or decrease power is valid, the system can also evaluate whether the proposed action has already been taken. The fourth column of Table 1 illustrates such an indication for each of the potential power changing actions. If the action has not been taken (indicated as either 'Y' for yes and 'N' for no in Table 1, but other possibilities are also contemplated), the system then evaluates whether taking the action will move the power average towards the power target. If the action is valid, has not been taken, and will have the desired effect, then it is triggered. If the action has been taken, the system evaluates whether undoing the action will move the power average towards the power target. If the action is valid, has been taken, and undoing it will have the desired effect, then it is undone. If neither of the two is true, then the action is skipped and the next action is considered.

For instance and again referring to FIG. 2, at time T₁ the average power is above the power target. The system consults the priority list, starting with the lowest priority item, and looks for a valid untaken action that will have the effect of decreasing the average power. The lowest priority action, shedding the optional load, is valid, but has already been taken. It is therefore skipped and the next action, charging the energy storage system (ESS) is considered. This particular action is valid and has not been taken, but it has the effect of increasing the power, the opposite of what is desired. Thus, charging the ESS is therefore skipped and action #5 is considered; curtailing the PV. The PV inverter is in grid-forming mode so this action is not valid, so it is skipped. This brings the system to the proposed action of discharging the ESS. This action is valid, it has not been taken, and will move the power in the desired direction, so it is taken.

When the controller 102 examines the state of the microgrid 100 at T₂, the power would have been below the desired power target. Since it is now possible to increase power consumption, now the controller 102 starts at the top of the example priority list shown in Table 1 with the highest priority action. Actions #1 - #4 are valid and have not been taken, but their effect would be to decrease power further, the opposite of the desired effect. Action #5 is not valid, so action #6, charging the ESS, is considered. This is valid, untaken, and would have the desired effect, so this action is triggered.

Note that if, for example, Actions #3 and #4 had been previously taken to decrease the power consumption, then when the power needed to be increased again then instead of charging the energy storage system the system would have restored the Loads. By cutting power from the bottom of the priority list the system ensures that low priority actions, such as cutting optional loads, are taken before more drastic measures like starting the generator. By increasing power from the top of the priority list the system ensures that high priority actions like restoring loads are taken before lower priority actions like charging the battery.

Other embodiments of the priority list shown in Table 1 are also contemplated, such as a priority list that responds to changing conditions. For an example of this, consider the modified priority list shown in Table 2. Here the priority of charging and discharging the ESS have been moved depending on whether or not the energy storage state of charge (SOC) is less than or greater than 60%. If the ESS SOC were above 60% then the priority list in Table 2 would function identically to the priority list in Table 1: actions #2 and #4 would be skipped because, with SOC > 60%, they are not valid. Although an SOC of 60% was used in this embodiment, it will be understood that other alternative values could also be used.

**Table 2: Example of an Action Priority List with Conditional Actions**

| Priority | Action | Valid? | Taken? | Effect |
|---|---|---|---|---|
| 1 | Shed Priority Load | Y | N | Decrease Power |
| 2 | Discharge ESS (SOC < 60%) | Y | N | Decrease Power |
| 3 | Turn on Generator in Grid-Forming Mode | Y | N | Decrease Power |
| 4 | Charge ESS (SOC < 60%) | Y | N | Increase Power |
| 5 | Shed Loads | Y | N | Decrease Power |
| 6 | Discharge ESS (SOC > 60%) | N | N | Decrease Power |
| 7 | Curtail PV | N | N | Increase Power |
| 8 | Charge ESS (SOC > 60%) | N | N | Increase Power |
| 9 | Shed Optional Load | Y | Y | Decrease Power |

To see the impact of a condition where SOC is below 60%, consider again the circumstance at T₁ where power needs to be decreased. In the example above the controller 102 settled on discharging the ESS to rectify this situation. However, if SOC is below 60% this action is no longer valid at this action number. The system would skip it and consider the next action, shedding the Loads. This action is valid, untaken, and would result in the desired effect of decreasing the power, so it would be taken. Using these conditional validity values, the user has ensured that the energy storage charge is conserved when less energy is available.

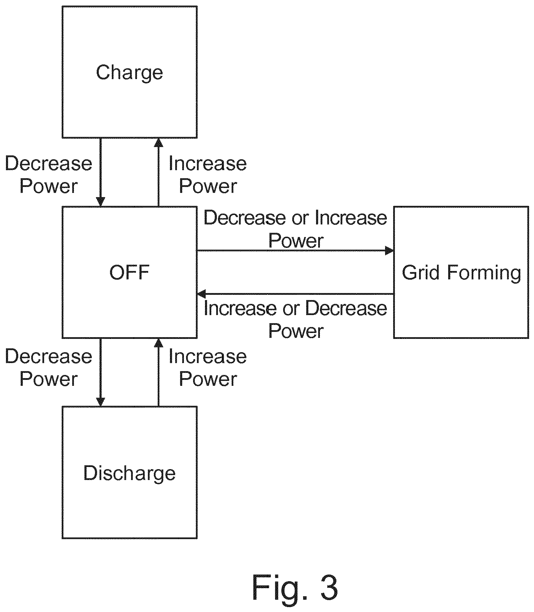

As will be appreciated from the discussion above, moving between shedding and restoring a load is fairly straightforward, but the operation of the ESS and other sources will be explicitly set forth to aid in further description of the instant subject matter. First, the ESS has four possible operating modes: off, charging, discharging, and grid-forming mode. These various modes are illustrated in FIG. 3. Charging and discharging mode should not be considered opposite actions when evaluating whether to undo an action. Undoing ESS charging, discharging, and grid-forming should all be considered to be moving the ESS into off mode. Charging increases the power drawn from the grid-forming source and undoing charging by going to off mode will decrease the power. Discharging decreases the power drawn from the grid-forming source and undoing discharging by going to off mode will increase the power. Putting the ESS into grid-forming mode is a special case where the ESS charges or discharges as necessary to maintain power balance, ensuring that the nanogrid voltage and frequency are held at a specified value. Putting the ESS into grid-forming mode can be considered to be increasing the power capacity of the nanogrid, splitting the power between the ESS and the current grid-forming source. Taking this action can be considered to have the effect of both decreasing and increasing the power drawn from the current grid-forming source when evaluating the impact of an action on the priority list. The user has the choice of how to mark this action when they program it, and can select one of the two impacts or use both depending on how they intend the ESS to be used.

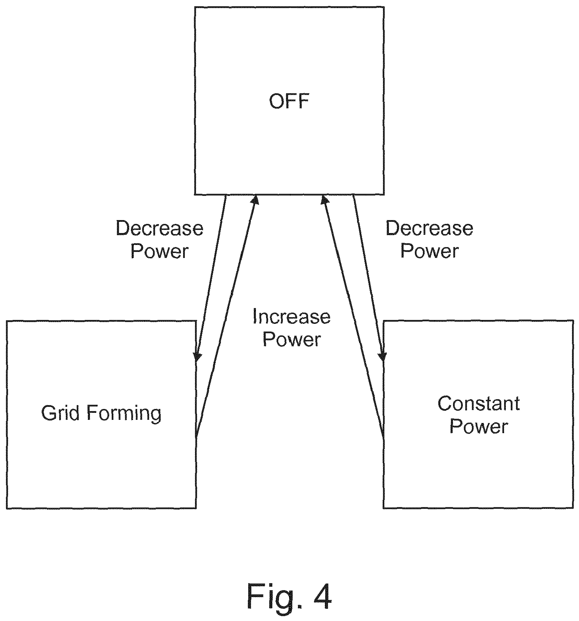

As shown in FIG. 4, a source such as a PV inverter 106 or generator 108 can be considered to have three operating modes: off, grid-forming mode, and constant power mode. Undoing grid-forming mode or constant power mode should be considered to be moving to the off mode. Operating the source in either grid-forming mode or constant power mode should be considered to have the effect of decreasing the power drawn from the current grid-forming source, so undoing these actions will have the effect of increasing the power drawn from the current grid-forming source. A generator in constant power mode will typically contribute its full rated power to the nanogrid, while a PV inverter in constant power mode will typically operate the PV system at its maximum power point, contributing a changing value of power depending on the power available from the sun at the current time. It is possible to connect a generator in constant power mode at some power less than its fully rated output, such as curtailing the output of a PV inverter, as additional actions in the priority list or even as the default action, as configured by the user.

It is anticipated that only one source will be in grid-forming mode at any given time. If more than one source is in grid-forming mode, then the power measured at the output of all sources in grid-forming mode should be summed when evaluating whether the average power in the time window will exceed the target power and hence whether action is required. The power limit should equal the sum of all power limits for the grid-forming sources, or can be set by the user for each condition with multiple grid-forming sources to take into account the full capacity of all grid-forming sources operating at one time.

Even in cases when only one grid-forming source is operating at a time, there will be a brief transition period when a new source may be put into grid-forming mode. Operation of the priority list method can be suspended during this time in favor of a grid-forming transition method. The nature of this transition method can include such steps as turning off all but the critical loads, putting the ESS into grid-forming mode, and then turning on the new grid-forming source, but other approaches can also be used. Once the new source is online, the ESS can be turned off and the loads can be restored according to the priority list method described above, working from the top of the priority list to increase power until the new grid-forming source is operating near its power target again.

Any given embodiment of the priority list can include actions that cause a transition between grid-forming sources, but this transition may also occur when using the current grid-forming source becomes invalid. This most commonly occurs when the utility grid experiences a fault and the nanogrid enters an islanded mode. In fact, switching to the utility grid as the grid-forming source can be independent of the priority list. Any time that the utility grid is available it can be used as the grid-forming source. Whenever it becomes unavailable, the grid-forming source may be selected from the remaining available sources based on the priority list or it may be that a specific source can be selected by the user to always be the grid-forming source when the utility grid is not available.

Two other instances when the grid-forming source might be switched based on events outside the priority list are if the power available to the PV system 106 below the power needed to keep even the critical loads online and if the ESS SOC drops low enough that it is no longer able to provide the energy needed by the loads. In these cases the nanogrid would collapse because the source could no longer support the loads. If this occurs and the current grid-forming source becomes invalid as a grid-forming source, the priority list can be immediately reevaluated to find a valid grid-forming source even if the measured power would not indicate that an action needs to be taken.

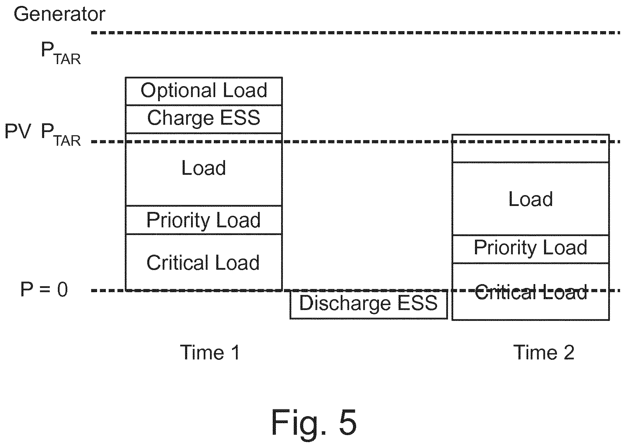

FIG. 5 illustrates an example of the controller 102 in operation. Each load is depicted as a quadrilateral whose height corresponds to its power consumption. Each source is marked as a negative load with a height corresponding to the power it could provide if it were activated. It is to be noted that in some embodiments the system has no way of knowing the power consumed by each load. It only measures the power at the output of the grid-forming source. These powers are shown here to aid the reader in understanding the process.

Referring again to FIG. 2 for the following scenario, just before Time 1, the grid 100 is in islanded mode and the PV system 106 is the grid forming source. The ESS 110 is charging and all loads, Optional, Regular (or simply "Loads" as shown in FIG. 1), Priority, and Critical, are online. The PV power target (P_{TAR}) is set to a value just below its maximum power point, which changes based on the measured insolation at the PV panel. It can be seen that the total power from all loads and the ESS 110 is provided by the PV system 106 and that this power exceeds the PV P_{TAR}. The energy management algorithm takes this signal and recognizes the need to take action to reduce the power consumption of the nanogrid.

Following the priority list given in Table 1, the controller 100 sheds the Optional load 112, undoes the action of putting the ESS 110 in charge mode (turning it off), and then takes the action of putting the ESS 110 in discharge mode. The ESS 110 acts as a negative load, reducing the power seen by the grid-forming source of the PV inverter 106. This can be envisioned as moving the power stack to start at a negative value equal to the magnitude of the power provided by the other sources (here, the ESS 110 in discharge mode). It can be seen that the stack, now starting at a level below zero, has a resulting positive value that is less than the PV P_{TAR}. If the average of the rest of the time in the power measurement window is considered, then these two time steps get the projected power within the deadband of the power target.

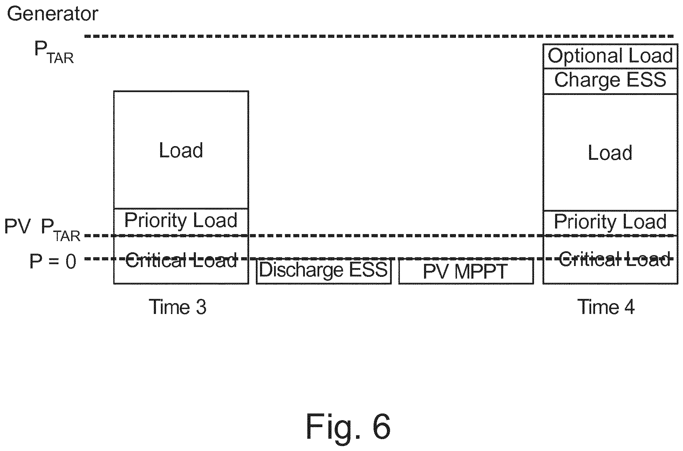

FIG. 6 illustrates a second example of the controller 100 in operation. Two changes have occurred between Time 2 and Time 3. First, the power drawn by Load has increased. Second, the insolation available to the PV panels has decreased, resulting in a reduction in the PV power target PV P_{TAR}. Even when all of the loads are shed and the ESS 110 is put in discharge mode, per the priority list in Table 1, the power consumption at the grid-forming source of the PV inverter is still above the power limit. The remaining action is to trigger action #2: putting the generator 108 in grid forming mode, which consequently switches the PV system 106 to constant power mode with maximum power point tracking (MPPT).

After a transition period, the situation is as shown in Time 4. The PV 106 acts as a source providing a negative load with a value equal to its maximum power point, so the stack starts at a negative value rather than zero. The generator target Generator P_{TAR} is high enough that all of the loads can be turned on and the ESS 110 can be switched out of discharge mode and into charge mode.

A few select aspects of the present disclosure include:
1) Incorporate electrical load (e.g. from any of the load types discussed above), ESS 110, and generator 108 control into a control system using a computation and configuration light priority list system;
2) Use the grid-forming source concept to ensure that power is measured at the appropriate place to trigger desired actions;
3) Having the power target of the PV inverter 106 be variable based on available insolation at the PV panels;
4) Using the negative load concept to program the action of activating ESS 110 and generation in constant power control modes alongside load shedding actions; and
5) Using the action validity check to make the priority list responsive to changing circumstances such as the SOC of the ESS and to enable generation sources to be operated in both grid-forming and constant power modes using the same priority list

One aspect of the present application provides an apparatus comprising a local grid controller for performing load management of a local electric grid, the local grid controller structured to activate at least one of a plurality of grid forming sources to operate as the grid-forming source and regulate the connection condition of a plurality of electrical loads, the controller further structured to re-designate the remaining grid forming sources as negative electrical loads which are included in the plurality of electrical loads, the local grid controller including a hierarchical ordering of the plurality of electrical loads and plurality of grid forming sources which is used to manage changing power conditions of the local electric grid, the power conditions including a target power provided by the grid forming source and a power consumption provided by the plurality of electrical loads.

A feature of the present application provides wherein the connection condition is one of a discharge state, charge state, or OFF.

Another feature of the present application provides wherein the hierarchical ordering also including a validity status associated with each of the plurality of grid forming sources and each of the plurality of electrical loads to determine whether a control action is valid to activate or regulate, respectively, one of the plurality of grid forming sources and plurality of electrical loads.

Still another feature of the present application provides wherein an electrical device can be represented in the hierarchical ordering as a grid forming source in one rank and an electrical load in another rank, the electrical device taking the form of any of a generator, a photovoltaic system, and an electrical storage system.

Yet still another feature of the present application provides wherein the plurality of grid forming sources can include two or more of the following: a utility grid, a generator, a photovoltaic system, and an electrical storage system.

Still yet another feature of the present application provides wherein at least one of the plurality of grid forming sources when not in a grid forming mode of operation is considered one of the plurality of electrical loads for purposes of determining power requirements of a local grid.

A further feature of the present application provides wherein the local grid controller includes a power target reference condition based upon which one of the plurality of grid forming sources is in grid forming mode of operation, and wherein the local grid controller further includes a deadband around the power target reference condition, wherein the deadband is used to suppress a control action if power consumption of the local grid falls within the deadband.

A still further feature of the present application provides wherein the power consumption is an average power consumption based upon measured power from the beginning of a time period as well as projected power for the remainder of the time window.

A yet still further feature of the present application provides wherein the local grid controller refers to the hierarchical ordering to determine whether a control action to deactivate at least one of the electrical loads is valid at the current time, and wherein the local grid controller is structured to deactivate at least one of the electrical loads when power consumption of the local grid exceeds a power threshold and the control action is valid at the current time.

Another aspect of the present application provides an apparatus comprising a microgrid controller configured for use with a plurality of grid forming sources and to conduct power load management, the microgrid controller structured to select a grid source from among the plurality of grid forming sources and to control a power state of a plurality of electrical loads, the microgrid controller including a priority list of the plurality of electrical loads and plurality of grid forming sources, the priority list including a prioritized ranking of the electrical loads and grid forming sources to determine in what order a power configuration change occurs in light of power consumption within and available power of a microgrid, the priority list also including a validity check associated with each of the plurality of electrical loads and each of the plurality of grid forming sources to determine whether a control action is valid to change a power state of the plurality of grid forming sources and plurality of electrical loads.

A feature of the present application provides wherein the plurality of grid forming sources includes two or more of a utility grid, a generator, a photovoltaic system, and an electrical storage system.

Another feature of the present application provides wherein an electrical device can act as a grid forming source in a first mode of operation and an electrical load in a second mode of operation, such that the electrical device can be one of the plurality of grid forming sources in the first mode of operation and one of the plurality of electrical loads in the second mode of operation.

Still another feature of the present application provides wherein the electrical device is considered a potential power source when not in a grid forming mode of operation, such that the power source is counted as a negative load when in an ON condition for purposes of determining power requirements of a local grid.

Yet another feature of the present application provides wherein the electrical storage system includes a plurality of validity checks based upon its state of charge.

Yet still another feature of the present application provides wherein the electrical storage system can be in a charge state which requires power from the microgrid, a discharge state which contributes power to the microgrid, or in a grid forming mode.

Still yet another feature of the present application provides wherein the photovoltaic system can be in grid forming mode or constant power mode, and wherein the controller is structured such that the grid source selected by the microgrid controller is in addition to a previous grid source selected by the controller.

A further feature of the present application provides wherein the microgrid controller is structured to compare total power draw from the plurality of electrical loads against a power target of the selected grid source from among the plurality of grid forming sources.

A still further feature of the present application provides wherein the plurality of electrical loads includes one or more loads of the plurality of electrical loads that fall within a category of loads that include any of the following: optional load, load, priority load, and critical load.

A yet still further feature of the present application provides wherein the microgrid controller utilizes the hierarchical ordering to determine a potential control action when average power exceeds a limit associated with the power target of the activated one of the plurality of grid forming sources, the control action including to activate one of the plurality of grid forming sources or regulate the connection state of a plurality of electrical loads, the potential control action determined based upon a change in total grid power provided by a potential control action and whether the potential control action is currently valid.

Still another aspect of the present application provides a method comprising operating a local grid having a grid forming source and a plurality of electrical loads, assessing power consumption of the plurality of electrical loads, detecting a power mismatch between a target power of the grid forming source and the assessed power consumption of the plurality of electrical loads, hierarchically working through a power hierarchy list of the plurality of loads to determine a control action to alleviate the power mismatch by changing a power condition of at least one of the plurality of loads, the power hierarchy providing a change in power for each of the plurality of electrical loads if a power condition of each respective plurality of loads is altered, and undertaking the control action to change the power condition of the at least one of the plurality of electrical loads if a validity check is satisfied which indicates the at least one of the plurality of electrical loads is eligible for a change in power condition.

A feature of the present application provides wherein the controller de-activates the grid forming source and re-designates one of the plurality of loads to be a replacement grid forming source, and wherein the grid forming source can be any of a utility grid, a generator, a photovoltaic system, and an electrical storage system.

Another feature of the present application provides wherein the assessing power consumption includes averaging power consumed and projected power remaining in a time window.

Still another feature of the present application provides wherein the power condition can be changed between two or more of the following conditions: a charging state, a discharging state, a constant power state, and an OFF state.

Yet still another feature of the present application provides wherein the at least one of the plurality of loads is at least one of an energy storage system and a photovoltaic system, and wherein the change in power is a negative value representative of a power state which contributes power to a local grid, and wherein the negative value is used to deduct power consumption from power consumption values associated with the remainder of the plurality of electrical loads.

Still yet another feature of the present application provides wherein the detecting includes suppressing the indication of a power mismatch if the difference between target power and the assessed power consumption falls within a pre-determined range.

While the invention has been illustrated and described in detail in the drawings and foregoing description, the same is to be considered as illustrative and not restrictive in character, it being understood that only the preferred embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

## Claims

1. An apparatus comprising:
a local grid controller for performing load management of a local electric grid, the local grid controller structured to activate at least one of a plurality of grid forming sources to operate as the grid-forming source and regulate the connection condition of a plurality of electrical loads, the controller further structured to re-designate the remaining grid forming sources as negative electrical loads which are included in the plurality of electrical loads, the local grid controller including a hierarchical ordering of the plurality of electrical loads and plurality of grid forming sources which is used to manage changing power conditions of the local electric grid, the power conditions including a target power provided by the grid forming source and a power consumption provided by the plurality of electrical loads.

2. The apparatus of claim 1, wherein the connection condition is one of a power providing state, power consuming state, or OFF; and
wherein the hierarchical ordering also including a validity status associated with each of the plurality of grid forming sources and each of the plurality of electrical loads to determine whether a control action is valid to activate or regulate, respectively, one of the plurality of grid forming sources and plurality of electrical loads.

3. The apparatus of claim 2, wherein an electrical device can be represented in the hierarchical ordering as a grid forming source in one rank and an electrical load in another rank, the electrical device taking the form of any of a generator, a renewable resource system, and an electrical storage system.

4. The apparatus of claim 1, wherein the plurality of grid forming sources can include two or more of the following: a utility grid, a generator, a renewable resource system, and an electrical storage system.

5. The apparatus of claim 4, wherein at least one of the plurality of grid forming sources when not in a grid forming mode of operation is considered one of the plurality of electrical loads for purposes of determining power requirements of a local grid.

6. The apparatus of claim 5, wherein the local grid controller includes a power target reference condition based upon which one of the plurality of grid forming sources is in grid forming mode of operation, and wherein the local grid controller further includes a deadband around the power target reference condition, wherein the deadband is used to suppress a control action if power consumption of the local grid falls within the deadband; and
wherein the power consumption is an average power consumption based upon measured power from the beginning of a time period as well as projected power for the remainder of the time window; or
wherein the local grid controller refers to the hierarchical ordering to determine whether a control action to deactivate at least one of the electrical loads is valid at the current time, and wherein the local grid controller is structured to deactivate at least one of the electrical loads when power consumption of the local grid exceeds a power threshold and the control action is valid at the current time.

7. An apparatus comprising:
a microgrid controller configured for use with a plurality of grid forming sources and to conduct power load management, the microgrid controller structured to select a grid source from among the plurality of grid forming sources and to control a power state of a plurality of electrical loads, the microgrid controller including a priority list of the plurality of electrical loads and plurality of grid forming sources, the priority list including a prioritized ranking of the electrical loads and grid forming sources to determine in what order a power configuration change occurs in light of power consumption within and available power of a microgrid, the priority list also including a validity check associated with each of the plurality of electrical loads and each of the plurality of grid forming sources to determine whether a control action is valid to change a power state of the plurality of grid forming sources and plurality of electrical loads.

8. The apparatus of claim 7, wherein the plurality of grid forming sources includes two or more of a utility grid, a generator, a renewable resource system, and an electrical storage system.

9. The apparatus of claim 8, wherein an electrical device can act as a grid forming source in a first mode of operation and an electrical load in a second mode of operation, such that the electrical device can be one of the plurality of grid forming sources in the first mode of operation and one of the plurality of electrical loads in the second mode of operation.

10. The apparatus of claim 9, wherein the electrical device is considered a potential power source when not in a grid forming mode of operation, such that the power source is counted as a negative load when in an ON condition for purposes of determining power requirements of a local grid.

11. The apparatus of claim 10, wherein the electrical storage system includes a plurality of validity checks based upon its state of charge; or
wherein the electrical storage system can be in a charge state which requires power from the microgrid, a discharge state which contributes power to the microgrid, or in a grid forming mode; and
wherein the renewable resource system can be in grid forming mode or constant power mode, and wherein the controller is structured such that the grid source selected by the microgrid controller is in addition to a previous grid source selected by the controller.

12. The apparatus of claim 7, wherein the microgrid controller is structured to compare total power draw from the plurality of electrical loads against a power target of the selected grid source from among the plurality of grid forming sources.

13. The apparatus of claim 12, wherein the plurality of electrical loads includes one or more loads of the plurality of electrical loads that fall within a category of loads that include any of the following: optional load, load, priority load, and critical load; and
wherein the microgrid controller utilizes the hierarchical ordering to determine a potential control action when average power exceeds a limit associated with the power target of the activated one of the plurality of grid forming sources, the control action including to activate one of the plurality of grid forming sources or regulate the connection state of a plurality of electrical loads, the potential control action determined based upon a change in total grid power provided by a potential control action and whether the potential control action is currently valid.

14. A method comprising:
operating a local grid having a grid forming source and a plurality of electrical loads;
assessing power consumption of the plurality of electrical loads;
detecting a power mismatch between a target power of the grid forming source and the assessed power consumption of the plurality of electrical loads;
hierarchically working through a power hierarchy list of the plurality of loads to determine a control action to alleviate the power mismatch by changing a power condition of at least one of the plurality of loads, the power hierarchy providing a change in power for each of the plurality of electrical loads if a power condition of each respective plurality of loads is altered; and
undertaking the control action to change the power condition of the at least one of the plurality of electrical loads if a validity check is satisfied which indicates the at least one of the plurality of electrical loads is eligible for a change in power condition.

15. The method of claim 14, wherein the controller de-activates the grid forming source and re-designates one of the plurality of loads to be a replacement grid forming source, and wherein the grid forming source can be any of a utility grid, a generator, a renewable resource system, and an electrical storage system; or
wherein the assessing power consumption includes averaging power consumed and projected power remaining in a time window; or
wherein the power condition can be changed between two or more of the following conditions: a charging state, a discharging state, a constant power state, and an OFF state; or
wherein the at least one of the plurality of loads is at least one of an energy storage system and a renewable resource system, and wherein the change in power is a negative value representative of a power state which contributes power to a local grid, and wherein the negative value is used to deduct power consumption from power consumption values associated with the remainder of the plurality of electrical loads; or
wherein the detecting includes suppressing the indication of a power mismatch if the difference between target power and the assessed power consumption falls within a pre-determined range.
